# EUROPEAN PATENT APPLICATION

(11) **EP 2 489 282 A2**
(43) Date of publication of application: **22.08.2012**
(21) Application number: 12168361.9
(22) Date of filing: 14.03.2008
(51) Int. Cl.: A23L 2/60, A23L 2/52, A23L 2/385

(54) **Tea extracts for reducing off-taste of non-nutritive sweeteners**

(30) Priority: 14.03.2007 US 686264
(62) Divisional of application: 08732219.4
(71) Applicant: The Concentrate Manufacturing Company of Ireland, Hamilton HM 12 (BM)
(72) Inventor: Johnson, Winsome, Ossining, NY 10562-1983 (US); Roy, Glenn, Beacon, NY 12508 (US); Lee, Thomas, Scarsdale, NY 10583 (US)
(74) Representative: Duxbury, Stephen

(57) **Abstract**

Aspects of the invention relate to beverage compositions, including, for example, concentrated and ready-to-drink beverages, sweetened with rebaudioside D and further including at least one tea extract in an unrecognizable amount sufficient to reduce the off-note taste of the non-nutritive sweetener. In certain embodiments, the tea extract comprises one or more extracts of tea selected from the group consisting of: black tea, oolong tea, green tea, white tea, herbal tea, and citrus tea.

## Description

### FIELD OF THE INVENTION

This invention relates to beverages and other beverage products, such as beverage concentrates and the like. In particular, this invention relates to beverages and other beverage products having formulations incorporating non-nutritive sweeteners and having improved flavor profiles or nutritional characteristics.

### BACKGROUND

It has long been known to produce beverages of various formulations. Improved and new formulations are desirable to meet changing market demands. In particular, there is perceived market demand for beverages having alternative nutritional characteristics, including, for example, alternative calorie content. Also, there is perceived market demand for beverages having alternative flavor profiles, including good taste, mouthfeel, etc. In addition, there is consumer interest in beverages and other beverage products, such as beverage concentrates, etc. whose formulations make greater use of natural ingredients, that is, ingredients distilled, extracted, concentrated or similarly obtained from harvested plants and other naturally occurring sources, with limited or no further processing.

The development of new beverage formulations, for example, new beverage formulations employing alternative sweeteners, flavorants, flavor enhancing agents and the like, presents challenges in addressing associated bitterness and/or other off-tastes. In addition, such challenges typically are presented in new beverage formulations developed for alternative nutritional and/or flavor profiles. Also, there is need for new beverage formulations which can satisfactorily meet the combination of objectives including nutritional characteristics, flavor, shelf life, and other objectives.

Development of new beverage formulations has faced obstacles. For example, U.S. Patent No. 4,956,191, incorporated herein by reference in its entirety, suggests that carbonated beverages which contain blends of saccharin or the Stevia extract with aspartame tend to be less organoleptically pleasing than those containing sugar.

It is therefore an object of the present invention to provide beverages and other beverage products. It is an object of at least certain embodiments of the invention (that is, not necessarily all embodiments of the invention) to provide beverages and other beverage products having desirable taste properties. It is an object of at least certain (but not necessarily all) embodiments of the invention to provide beverages and other beverage products having improved formulations. These and other objects, features and advantages of the invention or of certain embodiments of the invention will be apparent to those skilled in the art from the following disclosure and description of exemplary embodiments.

### BRIEF SUMMARY

In accordance with one aspect, a beverage product is provided, which is sweetened with nonnutritive sweetener components comprising at least one non-nutritive sweetener having an off-note taste, and which further comprises a tea extract. The tea extract is present in an amount effective to reduce (i.e., to partially, substantially or completely eliminate) an off-note taste of the non-nutritive sweetener, e.g., a bitter or metallic taste. The tea extract is present in an amount referred to here in some cases as a non-perceptible amount, an unrecognizable amount or the like, meaning the tea extract is used in an amount below its taste threshold amount. That is, the tea extract is used in an amount which is less than the amount required by most consumers to detect the flavor of the tea extract as a distinct flavor in the beverage product. Further, the terms non-perceptible amount, non-perceptible concentration and non-perceptible level are used here and in the appended claims interchangeably with the terms unrecognizable amount, unrecognizable concentration and unrecognizable level, respectively.

Thus, the tea extract is used in such embodiments of the beverage products disclosed here, that the consumer is unable to discern a tea flavor contributed by the tea extract. It should be recognized, hower, that the beverage products may be otherwise tea flavored. Thus, the non-perceptible amount is less than sufficient to contribute perceptible tea taste. The tea extract may be natural or synthetic, or may be a combination of natural and synthetic compounds or materials. In certain exemplary embodiments, a plurality of tea extracts are utilized in combination to reduce one or multiple off-note tastes of the non-nutritive sweetener component. As used here, the off-note taste of the non-nutritive sweetener is any taste or flavor feature of the non-nutritive sweetener which is unpleasant or otherwise undesirable in the beverage product in question, such as, for example, a bitter aftertaste, metallic taste or the like.

In accordance with another aspect, reduced calorie beverage products are provided, which are sweetened with the nonnutritive sweetener components, that is, at least one non-nutritive sweetener, and further comprises a tea extract in an amount sufficient to reduce (i.e., again, to partially, substantially or completely eliminate) the off-note taste of the non-nutritive sweetener. The tea extract is used in an amount below its taste threshold amount. That is, as explained above, the tea extract is used in an amount which is less than the amount required by most consumers to detect the flavor of the tea extract as a distinct flavor in the beverage. As used herein, "reduced calorie beverage" means a beverage having at least a 25% reduction in calories per 8 oz. serving of beverage as compared to the full calorie version, typically a previously commercialized full-calorie version. As used herein, a "low-calorie beverage" has fewer than 40 calories per 8 oz. serving of beverage. As used herein, "zero-calorie" or "diet" means having less than 5 calories per serving, e.g., per 8 oz. for beverages. The correlative meaning applies to beverage concentrates and other beverage products disclosed here. In certain exemplary embodiments, the reduced calorie beverage may be a diet beverage. The reduced calorie beverage may be sweetened entirely with one or more non-nutritive sweeteners or with a combination of nutritive and non-nutritive sweeteners.

In certain embodiments of the beverage and other products disclosed here, the tea extract is selected from the *Camellia* genus. Certain such embodiments, the tea extract comprises material from the species *Camellia sinensis.* In certain exemplary embodiments of beverages according to this disclosure, the tea extract is included in an amount effective to reduce the off-note taste of the non-nutritive sweetener. In certain exemplary embodiments of the beverages, tea extract is included in a concentration between about 50 parts per trillion and about 500 parts per million, e.g. between about 1 part per million and about 250 parts per million.

Unless clearly stated otherwise, reference here to a non-nutritive sweetener or to a non-nutritive sweetener component means one or more non-nutritive sweeteners. That is, the non-nutritive sweetener may be a single sweetener or a combination of non-nutritive sweeteners. In those embodiments employing multiple non-nutritive sweeteners, the off-note taste may be contributed by one or more of them. Different off-note tastes may be contributed by different ones of the non-nutritive sweeteners, and tea extract may be used in accordance wit this disclosure to reduce one or more of such multiple off-note tastes. In certain exemplary embodiments the same tea extract reduces multiple different off-note tastes. In other embodiments, the tea extract is a combination of multiple extracts, each of which is differently efficacious in reducing the multiple off-note tastes. In certain exemplary embodiments the non-nutritive sweetener is used together with nutritive sweetener, e.g., sugar, glucose-fructose syrup from natural sources such as apple, chicory, honey, etc., e.g., high fructose corn syrup (HFCS), Lo Han Guo juice concentrate, or the like.

In accordance with another aspect, a reduced calorie beverage concentrate is provided. In certain exemplary embodiments, the concentrate is a syrup. In yet other embodiments, the concentrate may be a dry powder mix. The reduced beverage concentrate is sweetened with at least one non-nutritive sweetener and further comprises a tea extract in the concentrate at a concentration which results in an unrecognizable amount of the tea extract in the resulting reduced calorie beverage. In certain embodiments, the tea extract is present in the concentrate in an amount sufficient at least to reduce (i.e., to partially, substantially or completely eliminate) the off-note taste of the non-nutritive sweetener in the resulting reduced calorie beverage. In select embodiments, a plurality of tea extracts is utilized. In certain embodiments, the plurality of tea extracts originate from multiple plant species.

In accordance with another aspect, a reduced calorie beverage concentrate is provided. In certain exemplary embodiments, the concentrate is a syrup. In yet other embodiments, the concentrate may be a dry powder mix. The reduced beverage concentrate is sweetened with at least one non-nutritive sweetener and further comprises a tea extract in the concentrate at a concentration which results in an unrecognizable amount of the tea extract in the resulting reduced calorie beverage. In certain embodiments, the tea extract is present in the concentrate in an amount sufficient at least to reduce (i.e., to partially, substantially or completely eliminate) the off-note taste of the non-nutritive sweetener in the resulting reduced calorie beverage. In select embodiments, a plurality of tea extracts is utilized. In certain embodiments, the plurality of tea extracts originate from multiple plant species.

Another aspect of the invention relates to products, e.g., products in a dry, liquid or other form, containing a mixture of non-nutritive sweetener with tea extract in an amount sufficient to reduce an off-note taste of the non-nutritive sweetener. The tea extract in such mixture, at least in certain embodiments, is present in an unrecognizable amount, that is, an amount insufficient (at the recommended or intended use level for the mixture in food) to generate an independently perceived tea flavor. In certain embodiments, the product comprises one or more packages holding a mixture of the non-nutritive sweetener(s) and tea extract (i.e., one or more tea extract components, as discussed above) for masking a metallic or other off-note taste of the non-nutritive sweetener(s) in food. In certain embodiments the nonnutritive sweetener and in the tea extract are combined in a substantially homogenous dry mixture. In certain embodiments, instructions are also provided on or with the packages for combining the mixture with an aqueous or other solution, e.g., into a beverage to be sweetened. In other embodiments, instructions may be omitted, however, the tea extract is present in a predetermined amount (relative to the amount of non-nutritive sweetener) that masks a metallic or other off-note taste of the non-nutritive sweetener

Another aspect of the invention relates to products, e.g., products in a dry, liquid or other form, containing a mixture of non-nutritive sweetener with tea extract in an amount sufficient to reduce an off-note taste of the non-nutritive sweetener. The tea extract in such mixture, at least in certain embodiments, is present in an unrecognizable amount, that is, an amount insufficient (at the recommended or intended use level for the mixture in food) to generate an independently perceived tea flavor. In certain embodiments, the product comprises one or more packages holding a mixture of the non-nutritive sweetener(s) and tea extract (i.e., one or more tea extract components, as discussed above) for masking a metallic or other off-note taste of the non-nutritive sweetener(s) in food. In certain embodiments the nonnutritive sweetener and in the tea extract are combined in a substantially homogenous dry mixture. In certain embodiments, instructions are also provided on or with the packages for combining the mixture with an aqueous or other solution, e.g., into a beverage to be sweetened. In other embodiments, instructions may be omitted, however, the tea extract is present in a predetermined amount (relative to the amount of non-nutritive sweetener) that masks a metallic or other off-note taste of the non-nutritive sweetener.

In accordance with another aspect, a clear beverage is provided comprising water, a non-nutritive sweetener component comprising a non-nutritive sweetener having an off-note taste, and a tea extract component in an amount effective to reduce the off-note taste of the non-nutritive sweetener. As used here, substantially clear means that the beverages have substantially no turbidity and substantially no color.

It will be appreciated by those skilled in the art, given the benefit of the following description of certain exemplary embodiments of the beverage and other beverage products disclosed here, that at least certain embodiments of the invention have improved or alternative formulations suitable to provide desirable taste profiles, nutritional characteristics, etc. These and other aspects, features and advantages of the invention or of certain embodiments of the invention will be further understood by those skilled in the art from the following description of exemplary embodiments.

### DETAILED DESCRIPTION OF CERTAIN EXEMPLARY EMBODIMENTS

It should be understood that beverages and other beverage products in accordance with this disclosure may have any of numerous different specific formulations or constitutions. The formulation of a beverage product in accordance with this disclosure can vary to a certain extent, depending upon such factors as the product's intended market segment, its desired nutritional characteristics, flavor profile and the like. For example, it will generally be an option to add further ingredients to the formulation of a particular beverage embodiment, including any of the beverage formulations described below. Additional (i.e., more and/or other) sweeteners may be added, flavorings, electrolytes, vitamins, fruit juices or other fruit products, tastants, masking agents and the like, flavor enhancers, and/or carbonation typically can be added to any such formulations to vary the taste, mouthfeel, nutritional characteristics, etc. In general, a beverage in accordance with this disclosure typically comprises at least water, sweetener and flavoring, and typically also acidulant, coloring and/or carbonation. Exemplary flavorings which may be suitable for at least certain formulations in accordance with this disclosure include cola flavoring, citrus flavoring, spice flavorings and others. Carbonation in the form of carbon dioxide may be added for effervescence. Preservatives can be added if desired, depending upon the other ingredients, production technique, desired shelf life, etc. Optionally, caffeine can be added. Certain exemplary embodiments of the beverages disclosed here are cola-flavored carbonated beverages, characteristically containing carbonated water, sweeteners, kola nut extract and/or other flavoring, caramel coloring, phosphoric acid, and optionally other ingredients. Additional and alternative suitable ingredients will be recognized by those skilled in the art given the benefit of this disclosure.

The beverage products disclosed here include beverages, i.e., ready to drink liquid formulations, beverage concentrates and the like. Beverages include, e.g., carbonated and non-carbonated soft drinks, fountain beverages, frozen ready-to-drink beverages, coffee beverages, tea beverages, dairy beverages, powdered soft drinks, as well as liquid, slurry or solid concentrates, flavored waters, enhanced waters, fruit juice and fruit juice-flavored drinks, sport drinks, and alcoholic products. With respect to tea beverages, it should be understood that the incorporation of any tea extract in accordance with this disclosure increases the level of one or more compounds or materials or the like beyond the level which would otherwise be present in the beverage due to the presence of just the tea flavoring component(s). At least certain exemplary embodiments of the beverage concentrates contemplated are prepared with an initial volume of water to which the additional ingredients are added. Full strength beverage compositions can be forked from the beverage concentrate by adding further volumes of water to the concentrate. Typically, for example, full strength beverages can be prepared from the concentrates by combining approximately 1 part concentrate with between approximately 3 to approximately 7 parts water. In certain exemplary embodiments the full strength beverage is prepared by combining 1 part concentrate with 5 parts water. In certain exemplary embodiments the additional water used to form the full strength beverages is carbonated water. In certain other embodiments, a full strength beverage is directly prepared without the formation of a concentrate and subsequent dilution.

Water is a basic ingredient in the beverages disclosed here, typically being the vehicle or primary liquid portion in which the remaining ingredients are dissolved, emulsified, suspended or dispersed. Purified water can be used in the manufacture of certain embodiments of the beverages disclosed here, and water of a standard beverage quality can be employed in order not to adversely affect beverage taste, odor, or appearance. The water typically will be clear, colorless, free from objectionable minerals, tastes and odors, free from organic matter, low in alkalinity and of acceptable microbiological quality based on industry and government standards applicable at the time of producing the beverage. In certain typical embodiments, water is present at a level of from about 80% to about 99.9% by weight of the beverage. In at least certain exemplary embodiments the water used in beverages and concentrates disclosed here is "treated water," which refers to water that has been treated to reduce the total dissolved solids of the water prior to optional supplementation, e.g., with calcium as disclosed in u.s. patent no. 7,052,725. Methods of producing treated water are known to those of ordinary skill in the art and include deionization, distillation, filtration and reverse osmosis ("r-o"), among others. The terms "created water," "purified water,", "demineralized water," "distilled water," and "r-o water" are understood to be generally synonymous in this discussion, referring to water from which substantially all mineral content has been removed, typically containing no more than about 500 ppm total dissolved solids, e.g. 250 ppm total dissolved solids.

As used herein, "taste" refers to a combination of sweetness perception, temporal effects of sweetness perception, i.e., on-set and duration, off-tastes, e.g. bitterness and metallic taste, residual perception (aftertaste) and tactile perception, e.g. body and thickness. As used herein, a "full-calorie" beverage formulation is one fully sweetened with a nutritive sweetener. The term. "nutritive sweetener" refers generally to sweeteners which provide significant caloric content in typical usage amounts, e.g., more than about 5 calories per 8 oz. serving of beverage. As used herein, a "potent sweetener" means a sweetener which is at least twice as sweet as sugar, that is, a sweetener which on a weight basis requires no more than half the weight of sugar to achieve an equivalent sweetness. For example, a potent sweetener may require less than one-half the weight of sugar to achieve an equivalent sweetness in a beverage sweetened to a level of 10 degrees Brix with sugar. Potent sweeteners include both nutritive (e.g., Lo Han Guo juice concentrate) and non-nutritive sweeteners (e.g., typically, Lo Han Guo powder). In addition, potent sweeteners include both natural potent sweeteners (e.g., steviol glycosides, Lo Han Guo, etc.) and artificial potent sweeteners (e.g., neotame, etc.). However, for natural beverage products disclosed here, only natural potent sweeteners are employed. Commonly accepted potency figures for certain potent sweeteners include, for example,

| | |
|---|---|
| Cyclamate | 30 times as sweet as sugar |
| Stevioside | 100-250 times as sweet as sugar |
| Mogroside V | 100-300 times as sweet as sugar |
| Rebaudioside A | 150-300 times as sweet as sugar |
| Acesulfalile-K | 200 times as sweet as sugar |
| Aspartame | 200 times as sweet as sugar |
| Saccharin | 300 times as sweet as sugar |
| Neohesperidin dihydrochalcone | 300 times as sweet as sugar |
| Sucralose | 600 times as sweet as sugar |
| Neotame | 8,000 times as sweet as sugar |

As used herein, a "non-nutritive sweetener" is one which does not provided significant caloric content in typical usage amounts, i.e., is one which imparts less than 5 calories per 8 oz. serving of beverage to achieve the sweetness equivalent of 10 Brix of sugar. As used herein, "reduced calorie beverage" means a beverage having at least a 25% reduction in calories per 8 oz. serving of beverage as compared to the full calorie version, typically a previously commercialized full-calorie version. As used herein, a "low-calorie beverage" has fewer than 40 calories per 8 oz. serving of beverage. As used herein, "zero-calorie" or "diet" means having less than 5 calories per serving, e.g., per 8 oz. for beverages.

Natural embodiments of the beverage products disclosed here are natural in that they do not contain anything artificial or synthetic (including any color additives regardless of source) that would not normally be expected to be in the food. As used herein, therefore, a "natural" beverage composition is defined in accordance with the following guidelines: Raw materials for a natural ingredient exists or originates in nature. Biological synthesis involving fermentation and enzymes can be employed, but synthesis with chemical reagents is not utilized. Artificial colors, preservatives, and flavors are not considered natural ingredients. Ingredients may be processed or purified through certain specified techniques including at least: physical processes, fermentation, and enzymolysis. Appropriate processes and purification techniques include at least: absorption, adsorption, agglomeration, centrifugation, chopping, cooking (baking, frying, boiling, roasting), cooling, cutting, chromatography, coating, crystallization, digestion, drying (spray, freeze drying, vacuum), evaporation, distillation, electrophoresis, emulsification, encapsulation, extraction, extrusion, filtration, fermentation, grinding, infusion, maceration, microbiological (rennet, enzymes), mixing, peeling, percolation, refrigeration/freezing, squeezing, steeping, washing, heating, mixing, ion exchange, lyophilization, osmose, precipitation, salting out, sublimation, ultrasonic treatment, concentration, flocculation, homogenization, reconstitution, enzymolysis (using enzymes found in nature). Processing aids (currently defined as substances used as manufacturing aids to enhance the appeal or utility of a food component, including clarifying agents, catalysts, flocculants, filter aids, and crystallization inhibitors, etc. See 21 CFR § 170.3(o)(24)) are considered incidental additives and may be used if removed appropriately.

Sweeteners suitable for use in various embodiments of the beverages disclosed here include nutritive and non-nutritive, natural and artificial or synthetic sweeteners. Suitable non-nutritive sweeteners and combinations of sweeteners are selected for the desired nutritional characteristics, taste profile for the beverage, mouthfeel and other organoleptic factors. Non-nutritive sweeteners suitable for at least certain exemplary embodiments include, for example, peptide based sweeteners, e.g., aspartame, neotame, and alitame, and non-peptide based sweeteners, for example, sodium saccharin, calcium saccharin, acesulfame potassium, sodium cyclamate, calcium cyclamate, neohesperidin dihydrochalcone, and sucralose. Alitame may be less desirable for caramel-containing beverages where it has been known to form a precipitate. In certain exemplary embodiments the beverage product employs aspartame, as the sweetener, either alone or with other sweeteners. In certain other exemplary embodiments the sweetener comprises aspartame and acesulfame potassium. Other non-nutritive sweeteners suitable for at least certain exemplary embodiments include, for example, sorbitol, mannitol, xylitol, glycyrrhizin, D-tagatose, erythritol, meso-erythritol, malitol, maltose, lactose, fructo-oligosaccharides, Lo Han Guo powder, steviol glycosides, e.g., rebaudiosides such as Rebaudioside A, stevioside, etc. acesulfame, aspartame, other dipeptides, cyclamate, sucralose, saccharin, xylose, arabinose, isomalt, lactitol, maltitol, trehalose, and ribose, and protein, sweeteners such as thaumatin, monellin, brazzein, L-alanine and glycine, related compounds, and mixtures of any of them. Lo Han Guo, steviol glycosides, e.g., rebaudiosides such as Rebaudioside A, stevioside, etc. and related compounds, as discussed further below, are natural non-nutritive potent sweeteners. It will be within the ability of those skilled in the art, given the benefit of this disclosure, to select suitable non-nutritive sweetener (e.g., one or combination of non-nutritive sweeteners, either alone or together with nutritive sweetener) for a particular embodiment of the beverage products disclosed here employing tea extract to mask an off-note taste of the nonnutritive sweetener.

In at least certain exemplary embodiments of the beverages disclosed here, the sweetener component can include nutritive, natural crystalline or liquid sweeteners such as sucrose, liquid sucrose, fructose, liquid fructose, glucose, liquid glucose, glucose-fructose syrup from natural sources such as apple, chicory, honey, etc., e.g., high fructose corn syrup, invert sugar, maple syrup, maple sugar, honey, brown sugar molasses, e.g., cane molasses, such as first molasses, second molasses, blackstrap molasses, and sugar beet molasses, sorghum syrup, Lo Han Guo juice concentrate and/or others. Such sweeteners are present in at least certain exemplary embodiments in an amount of from about 0.1% to about 20% by weight of the beverage, such as from about 6% to about 16% by weight, depending upon the desired level of sweetness for the beverage. To achieve desired beverage uniformity, texture and taste, in certain exemplary embodiments of the natural beverage products disclosed here, standardized liquid sugars as are commonly employed in the beverage industry can be used. Typically such standardized sweeteners are free of traces of nonsugar solids which could adversely affect the flavor, color or consistency of the beverage.

The sweeteners are edible consumables suitable for consumption and for use in beverages. By "edible consumables" is meant a food or beverage or an ingredient of a food or beverage for human or animal consumption. The sweetener or sweetening agent used here and in the claims can be a nutritive or non-nutritive, natural or synthetic beverage ingredient or additive (or mixtures of them) which provides sweetness to the beverage, i.e., which is perceived as sweet by the sense of taste. The perception of flavoring agents and sweetening agents may depend to some extent on the interrelation of elements. Flavor and sweetness may also be perceived separately, i.e., flavor and sweetness perception may be both dependent upon each other and independent of each other. For example, when a large amount of a flavoring agent is used, a small amount of a sweetening agent may be readily perceptible and vice versa. Thus, the oral and olfactory interaction between a flavoring agent and a sweetening agent may involve the interrelationship of elements.

Non-nutritive, high potency sweeteners typically are employed at a level of milligrams per fluid ounce of beverage, according to their sweetening power, any applicable regulatory provisions of the country where the beverage is to be marketed, the desired level of sweetness of the beverage, etc. It will be within the ability of those skilled in the art, given the benefit of this disclosure, to select suitable additional or alternative sweeteners for use in various embodiments of the beverage products disclosed here.

As mentioned above, at least certain exemplary embodiments of the beverages disclosed here employ steviol glycosides, e.g., rebaudiosides such as Rebaudioside A, stevioside, etc. or related compounds or mixtures of any of them for sweetening. These compounds can be obtained by extraction or the like from the stevia plant. Stevia (e.g., Stevia rebaudiana bectoni) is a sweet-tasting plant. The leaves contain a complex mixture of natural sweet diterpene glycosides. Steviol glycosides, e.g., rebaudiosides such as Rebaudioside A, stevioside, etc. are components of Stevia that contribute sweetness. Typically, these compounds are found to include stevioside (4-13% dry weight), steviolbioside (trace), the rebaudiosides, including rebaudioside A (2-4%), rebaudiosides B (trace), rebaudioside C (1-2%), rebaudioside D (trace), and rebaudioside E (trace), and dulcoside A (0.4-0.7%). The dry weight composition is given as protein ∼6.2%, lipids ∼5.6%, total carbohydrates ∼52.8%, stevioside∼15% (1) and about 42% water-soluble substances. The following nonsweet constituents also have been identified in the leaves of stevia plants: labdane, diterpene, triterpenes, sterols, flavonoids, volatile oil constituents, pigments, gums and inorganic matter.

The sweetener Lo Han Guo, which has various different spellings and pronunciations and is abbreviated here In some instances as LHG, can be obtained from fruit of the plant family Cucurbitaceae, tribe Jollifieae, subtribe Thladianthinae, genus Siraitia. LHG often is obtained from the genus/species S. grosvenorii, S. siamnensis, S. silomaradjae, S. sikkimensis, S. africana, S, borneensis, and S. taiwaniana. Suitable fruit includes that of the genus/species S. grosvenorii, which is often called Lo Han Guo fruit. LHG contains triterpene glycosides or mogrosides, which constituents may be used as LHG.sweeteners. Lo Han Guo is a potent sweetener which can be provided as a natural nutritive or natural non-nutritive sweetener. For example, Lo Han Guo juice concentrate may be a nutritive sweetener, and Lo Han Guo powder may be a non-nutritive sweetener. Lo Han Guo can be used as the juice or juice concentrate, powder, etc. Preferably LHG juice contains at least about 0.1%, e.g., from 0.1% to about 15%, mogrosides, preferably mogroside V, mogroside IV, 11-oxo-mogroside V, siamenoside and mixtures thereof. LHG can be produced, for example, as discussed in U.S. patent No. 5,411,755. Sweeteners from other fruits, vegetables or plants also may be used as natural or processed sweeteners or sweetness enhancers in at least certain exemplary embodiments of the beverages disclosed here.

Certain exemplary embodiments of the beverage products disclosed here are reduced calorie beverages comprising tea extract in an amount sufficient to mask a metallic off-note taste of the non-nutritive sweetener. The tea extracts optionally are combined with flavoring agents. For example, there is a market demand for consumer beverages having tea mixed with juices and employing non-nutritive sweeteners. Tea extract is used in such beverages, in accordance with such embodiments of the present disclosure, to mask a metallic off-note taste of the non-nutritive sweetener. Some illustrative examples of commercially available beverages in which tea extract and non-nutritive sweetener can be substituted for some or all of the nutritive sweetener content, in accordance with the principles disclosed here, include Snapple brand soft drinks (Sunset Foods) and Fruit Tea Twister (Tropicana). Such commercially available products attempt to provide the flavor of tea and fruit simultaneously.

According to certain embodiments of the beverage products disclosed here, one or more tea extracts are utilized to mask one or more off-note tastes of non-nutritive sweeteners in the beverage and/or concentrate without the consumer discerning the taste of the tea extract. As used herein, the term "tea extract" includes any and all extracted products from one or more biological tea materials. In certain exemplary embodiments, the biological materials comprise tea leaves. The leaves may be fresh, dried, pulverized, ground, heat-treated, partially or wholly fermented or combinations thereof. In yet other embodiments, stems, twigs, buds, flowers and/or other portions of biological material from one or more tea varieties may be utilized in combination with leaves or individually separate from the leaves.

In certain exemplary embodiments, the tea extract may be obtained from a single variety of tea, such as biological materials from a single species. Yet in other embodiments the tea extract comprises a plurality of tea varieties, such as biological materials from several species of tea plants within a genus. In still yet further embodiments, the tea extract comprises biological materials from tea varieties that are entirely unrelated. Certain such embodiments may include, for example, an extract comprising biological materials from a conventional tea plant and a citrus variety.

In certain embodiments, the biological tea materials are selected from the *Camellia* genus. In certain such embodiments, the tea materials include the species *Camellia sinensis.* The one or more tea extracts may be black tea, oolong tea, green tea, white tea, herbal tea, citrus tea, infusions, and any and all extracts from biological materials as discussed below.

Methods for obtaining an extract from biological tea materials are well-known to those skilled in the art. Illustrative examples of producing tea extracts may be found, for example, in U.S. Pat. No. 3,531,296, filed March 7, 1967, U.S. Pat. No. 5,827,560, filed April 14, 1997, U.S. Pat. No. 5,895,672, filed Jan 13, 1998, U.S. Pat. No. 5,780,086, filed July 14, 1998 which are hereby incorporated by reference in their entireties.

In common extraction methods, biological tea materials are combined with water and/or one or more water soluble organic solvents. The water is often provided at elevated temperatures to expedite the process. Yet, other methods may incorporate pressure or otherwise alter the extraction environment to expedite or increase efficiency of they process. In certain embodiments, catechins available from the other raw materials and chemically synthesized products may also be utilized to increase the health benefits of the tea extract. It will be readily appreciated by those skilled in the art upon reading this disclosure that the amount of tea extract utilized will vary depending on a large quantity of factors, such as the flavor profile of the beverage product(s), the distribution and storage of the beverage product, economic considerations, the concentration of the non-nutritive sweetener in the beverage product, the amount of other ingredients of the beverage product.

The extract may be manufactured, distributed, and/or stored in different physical states and/or form, including, for example, a solid, an aqueous solution or a slurry. In certain embodiments, aqueous solutions may introduced and/or removed to alter the state or form of the extract. The various aqueous solutions may include, for example, water, carbonated water or a tea extract having a different concentration of tea extract.

According to one aspect of the invention, an unrecognizable amount of tea extract is used in conjunction with a non-nutritive sweetener in a beverage product, for example, ready-to-drink beverages or concentrates, such as a dry powder or syrup. As used herein, the term "an unrecognizable amount of tea extract" refers to a quantity or concentration of tea extract that alters the flavor profile of the beverage but is not itself recognizable as contributing a tea flavor to the beverage. Thus, a person consuming the beverage would not discern from the tea extract added to the beverage in accordance with this disclosure, the grassy or woody notes normally associated with a tea beverage when properly prepared or otherwise reformulated for consumption.

In certain exemplary embodiments the tea extract is operative in the beverage product or sweetener product as a masking agent. More specifically, the tea extract is operative to cover up off-notes of non-nutritive sweetener in the beverage (here, again, meaning one or more non-nutritive sweeteners). While non-nutritive sweeteners provide a characteristic sweet flavor, non-nutritive sweeteners may in certain beverage formulations provide non-sweet off-notes. For example, steviol glycosides and other non-nutritive sweeteners are often accompanied by metallic or bitter off-notes. Thus, according to certain embodiments of the products disclosed here, one or more tea extracts are utilized in an amount sufficient to reduce (i.e., to partially, substantially or completely eliminate) the off-note taste of the non-nutritive sweetener. The exact type and/or quantity of the tea extracts used to mask the off notes depend on a myriad of factors, including the type of beverage, environmental conditions in manufacturing, distributing and storing the beverages, the beverage flavor profile, pH of the beverage, among other factors.

Another aspect of the present disclosure relates to non-beverage products containing non-nutritive sweetener (here, again, meaning one or more non-nutritive sweeteners) and tea extract at a level below its normally perceptible level. In certain embodiments, the product comprises one or more packages for storing a mixture of the not-nutritive sweetener and one or more tea extracts for masking a metallic off-note taste of the non-nutritive sweetener. In certain exemplary embodiments, instructions are also provided for combining the mixture with an aqueous solution. The instructions may be provided in any form, such as provided on the exterior of the product, for example, presented on the exterior of a cardboard box containing the non-nutritive sweetener(s) and extract(s). In other embodiments, the instructions may be contained within the product, such as one on or more readable surfaces, including, for example, paper or cardboard packaging for the product. The tea extract in an unrecognizable, i.e., non-independently perceptible amount is nevertheless effective to reduce a metallic off-note taste of the non-nutritive sweetener when the instructions are followed. In certain embodiments, a predetermined amount of mixture is provided in the package. In certain embodiments, the instructions are not necessary; the consumer is aware of the amount of sweetener mixture to be used or the amount is readily estimated. As an example, consumers of coffee beverages generally apply a uniform number of sweetener packets per volume of coffee. For example, a consumer may routinely place 2 packets of sweetener in a cup of coffee regardless whether the sweetener is sugar, aspartame, sucralose, etc. Thus, certain embodiments of the sweetener products disclosed here may not require an indication of amount to be used. Other uses for such dry sweetener mixtures include, for example, use in other aqueous foods, cooked or ready to eat cereal products, and the like, in all of which the tea extract in an unrecognizable amount masks a metallic or other off-note taste of the non-nutritive sweetener..

Acid used in beverages disclosed here can serve any one or more of several functions, including, for example, lending tartness to the taste of the beverage, enhancing palatability, increasing thirst quenching effect, modifying sweetness and acting as a mild preservative. Suitable acids are known and will be apparent to those skilled in the art given the benefit of this disclosure. Exemplary acids suitable for use in some or all embodiments of the beverage products disclosed here include phosphoric acid, citric, malic, tartaric, lactic, formic, ascorbic, fumaric, gluconic, succinic, maleic and adipic and mixtures of any of them. The acid can be used in solution form, for example, and in an amount sufficient to provide the desired pH of the beverage. Typically, for example, the one or more acids of the acidulant are used in amount, collectively, of from about 0.01% to about 1.0% by weight of the beverage, e.g., from about 0.05% to about 0.5% by weight of the beverage, such as 0.1% to 0.25% by weight of the beverage, depending upon the acidulant used, desired ph, other ingredients used, etc. The pH of at least certain exemplary embodiments of the beverages disclosed here can be a value within the range of from about 2.0 to about 5.0. The acid in certain exemplary embodiments enhances beverage flavor. Too much acid can impair the beverage flavor and result in sourness or other off-taste, while too little acid can make the beverage taste flat.

The particular acid or acids chosen and the amount used will depend, in part, on the other ingredients, the desired shelf life of the beverage product, as well as effects on the beverage pH, titratable acidity, and taste. Those skilled in the art, given the benefit of this disclosure, will recognize that when preparing beverage products containing peptide-based artificial sweeteners such as aspartame, the resulting beverage composition is best maintained below a certain pH to retain the sweetening effect of the artificial sweetener. In the formation of calcium-supplemented beverages, the presence of calcium salts increases the pH which requires additional acids to both assist the dissolution of the salt and maintain a desirable pH for stability of the artificial sweetener. The presence of the additional acid in the beverage composition, which increases the titratable acidity of the composition, will result in a more tart or sour taste to the resulting beverage. It will be within the ability of those skilled in the art, given the benefit of this disclosure, to select a suitable acid or combination caf acids and the amounts caf such acids for the acidulant component of any particular embodiment of the beverage products disclosed here.

Certain exemplary embodiments of the beverage products disclosed here also may contain small amounts of alkaline agents to adjust pH. Such agents include, e.g., potassium hydroxide, sodium hydroxide and potassium carbonate. For example, the alkaline agent potassium hydroxide may be used in an amount of from about 0.02 to about 0.04% by weight, with an amount of about 0.03% being typical for certain beverages. The amount will depend, of course, on the type of alkaline agents and on the degree to which the pH is to be adjusted.

The beverage products disclosed here optionally contain a flavor composition, for example, natural and synthetic fruit flavors, botanical flavors, other flavors, and mixtures thereof. As used here, the term "fruit flavor" refers generally to those flavors derived from the edible reproductive part of a seed plant. Included are both those wherein a sweet pulp is associated with the seed, e.g., banana, tomato, cranberry and the like, and those having a small, fleshy berry. The term berry also is used here to include aggregate fruits, i.e., not "true" berries, but that are commonly accepted as a berry. Also included within the term "fruit flavor" are synthetically prepared flavors made to simulate fruit flavors derived from natural sources. Examples of suitable fruit or berry sources include whole berries or portions thereof, berry juice, berry juice concentrates, berry purees and blends thereof, dried berry powders, dried berry juice powders, and the like.

Exemplary fruit flavors include the citrus flavors, e.g., orange, lemon, lime and grapefruit, and such flavors as apple, grape, cherry, and pineapple flavors and the like, and mixtures thereof. In certain exemplary embodiments the beverage concentrates and beverages comprise a fruit flavor component, e.g., a juice concentrate or juice. As used here, the term "botanical flavor" refers to flavors derived from parts of a plant other than the fruit. As such, botanical flavors can include those flavors derived from essential oils and extracts of nuts, bark, roots and leaves. Also included within the term "botanical flavor" are synthetically prepared flavors made to simulate botanical flavors derived from natural sources. Examples of such flavors include cola flavors, tea flavors, and the like, and mixtures thereof. The flavor component can further comprise a blend of various of the above-mentioned flavors. In certain exemplary embodiments of the beverage concentrates and beverage a cola flavor component is used or a tea flavor component. The particular amount of the flavor component useful for imparting flavor characteristics to the beverages of the present invention will depend upon the flavor(s) selected, the flavor impression desired, and the form of the flavor component. Those skilled the art, given the benefit of this disclosure, will be readily able to determine the amount of any particular flavor component(s) used to achieve the desired flavor impression.

Juices suitable for use in at least certain exemplary embodiments of the beverage products disclosed here include, e.g., fruit, vegetable and berry juices. Juices can be employed in the present invention in the form of a concentrate, puree, single-strength juice, or other suitable forms. The term "juice" as used here includes single-strength fruit, berry, or vegetable juice, as well as concentrates, purees, milks, and other form. Multiple different fruit, vegetable and/or berry juices can be combined, optionally along with other flavorings, to generate a beverage having the desired flavor. Examples of suitable juice sources include plum, prune, date, currant, fig, grape, raisin, cranberry, pineapple, peach, banana, apple, pear, guava, apricot, Saskatoon berry, blueberry, plains berry, prairie berry, mulberry, elderberry, Barbados cherry (acerola cherry), coke cherry, date, coconut, olive, raspberry, strawberry, huckleberry, loganberry, currant, dewberry, boysenberry, kiwi, cherry, blackberry, quince, buckthorn, passion fruit, sloe, rowan, gooseberry, pomegranate, persimmon, mango, rhubarb, papaya, litchi, lemon, orange, lime, tangerine, tangerine, mandarin orange, tangelo, and pomelo and grapefruit etc. Numerous additional and alternative juices suitable for use in at least certain exemplary embodiments will be apparent to those skilled in the art given the benefit of this disclosure. In the beverages of the present invention employing juice, juice may be used, for example, at a level of at least about 0.2% by weight of the beverage. In certain exemplary embodiments juice is employed at a level of from about 0.2% to about 40% by weight of the beverage. Typically, juice can be used, if at all, in an amount of from about 1% to about 20% by weight.

Certain such juices which are lighter in color can be included in the formulation of certain exemplary embodiments to adjust the flavor and/or increase the juice content of the beverage without darkening the beverage color. Examples of such juices include apple, pear, pineapple, peach, lemon, lime, orange, apricot, grapefruit, tangerine, rhubarb, cassis, quince, passion fruit, papaya, mango, guava, litchi, kiwi, mandarin, coconut, and banana. Deflavored and decolored juices can be employed if desired. Other flavorings suitable for use in at least certain exemplary embodiments of the beverage products disclosed here include, e.g., spice flavorings, such as cassia, clove, cinnamon, pepper, ginger, vanilla spice flavorings, cardamom, coriander, root beer, sassafras, ginseng, and others. Numerous additional and alternative flavorings suitable for use in at least certain exemplary embodiments will be apparent to those skilled in the art given the benefit of this disclosure. Flavorings can be in the form of an extract, oleoresin, juice concentrate, bottler's base, or other forms known in the art. In at least certain exemplary embodiments, such spice or other flavors complement that of a juices or juice combination.

The one or more flavorings can be used in the form of an emulsion. A flavoring emulsion can be prepared by mixing some or all of the flavorings together, optionally together with other ingredients of the beverage, and an emulsifying agent. The emulsifying agent may be added with or after the flavorings mixed together. In certain exemplary embodiments the emulsifying agent is water-soluble. Exemplary suitable emulsifying agents include gum acacia, modified starch, carboxymethylcellulose, gum tragacanth, gum ghatti and other suitable gums. Additional suitable emulsifying agents will be apparent to those skilled in the art of beverage formulations, given the benefit of this disclosure. The emulsifier in exemplary embodiments comprises greater than about 3% thy mixture of flavorings and emulsifier. In certain exemplary embodiments the emulsifier is from about 5% to about 30% of the mixture.

Carbon, dioxide is used to provide effervescence to certain exemplary embodiments of the beverages disclosed here. Any of the techniques and carbonating equipment known in the art for carbonating beverages can be employed. Carbon dioxide can enhance the beverage taste and appearance and can aid in safeguarding the beverage purity by inhibiting and destroying objectionable bacteria. In certain embodiments, for example, the beverage has a CO₂ level up to about 7.0 volumes carbon dioxide. Typical embodiments may have, for example, from about 0.5 to 5.0 volumes of carbon dioxide. As used here and independent claims, one volume of carbon dioxide is defined as the amount of carbon dioxide absorbed by any given quantity of water at 60° F (16° C) temperature and atmospheric pressure. A volume of gas occupies the same space as does the water by which it is absorbed. The carbon dioxide content can be selected by those skilled in the art based on the desired level of effervescence and the impact of the carbon dioxide on the taste or mouthfeel of the beverage. The carbonation can be natural or synthetic.

Optionally, caffeine can be added to various embodiments of the beverages disclosed here. The amount of caffeine added is determined by the desired beverage properties, any applicable regulatory provisions of the country where the beverage is to be marketed, etc. In certain exemplary embodiments caffeine is included at a level of 0.02 percent or less by weight of the beverage. The caffeine must be of a purity acceptable for use in foods and beverages. The caffeine can be natural or synthetic in origin.

The beverage concentrates and beverages disclosed here may contain additional ingredients, including, generally, any of those typically found in beverage formulations. These additional ingredients, for example, can typically be added to a stabilized beverage concentrate. Examples of such additional ingredients include, but are not limited to, caffeine, caramel and other coloring agents or dyes, antifoaming agents, gums, emulsifiers, tea solids, cloud components, and mineral and non-mineral nutritional supplements. Examples of non-mineral nutritional supplement ingredients are known to those of ordinary skill in the art and include, for example, antioxidants and vitamins, including Vitamins A, D, E (tocopherol), C (ascorbic acid), B (thiamine), B₂ (riboflavin), B₆, B₁₂, and K, niacin, folic acid, biotin, and combinations thereof. The optional non-mineral nutritional supplement are typically present in amounts generally accepted under good manufacturing practices. Exemplary amounts are between about 1% and about 100% RDV, where such RDV are established. In certain exemplary embodiments the non-mineral nutritional supplement ingredient(s) are present in an amount of from about 5% to about 20% RDV, where established.

Preservatives may be used in at least certain embodiments of the beverages disclosed here. That is, at least certain exemplary embodiments contain an optional dissolved preservative system. Solutions with a pH below 4 and especially those below 3 typically are "microstable," i.e., they resist growth of microorganisms, and so are suitable for longer term storage prior to consumption without the need for further preservatives. However, an additional preservative system can be used if desired. If a preservatives system is used, it can be added to the beverage product at any suitable time during production, e.g., in some cases prior to the addition of the sweetener. As used here, the terms "preservation system" or "preservatives" include all suitable preservatives approved for use in food and beverage compositions, including, without limitation, such known chemical preservatives as benzoates, e.g., sodium, calcium, and potassium benzoate, sorbates, e.g., sodium, calcium, and potassium sorbate, citrates, e.g., sodium citrate and potassium citrate, polyphosphates, eg., sodium hexametaphosphate (SHMP), and mixtures thereof, and antioxidants such as ascorbic acid, EDTA, BHA, BHT, TBHQ, EMIQ, dehydroacetic acid, dimethyldicarbonate, ethoxyquin, heptylparaben, and combinations thereof. Preservatives can be used in amounts not exceeding mandated maximum levels under applicable laws and regulations. The level of preservative used typically is adjusted according to the planned final product pH, as well as an evaluation of the microbiological spoilage potential of the particular beverage formulation. The maximum level employed typically is about 0.05% by weight of the beverage. It will be within the ability of those skilled in the art, given the benefit of this disclosure, to select a suitable preservative or combination of preservatives for beverages according to this disclosure.

Other methods of beverage preservation suitable for at least certain exemplary embodiments of the beverage products disclosed here include, e.g., aseptic packaging and/or heat treatment or thermal processing steps, such as hot filling and tunnel pasteurization. Such steps can be used to reduce yeast, mold and microbial growth in the beverage products. For example, U.S. Patent No. 4,830,862 to Braun et al. discloses the use of pasteurization in the production of fruit juice beverages as well as the use of suitable preservatives in carbonated beverages. U.S. Patent No. 4,925,686 to Kastin discloses a heat-pasteurized freezable fruit juice composition, which contains sodium benzoate and potassium sorbate. In general, heat treatment includes hot fill methods typically using high temperatures for a short time, e.g., about 190° F for 10 seconds, tunnel pasteurization methods typically using lower temperatures for a longer time, e.g., about 160° F for 10-15 minutes, and retort methods typically using, e.g., about 250° F for 3-5 minutes at elevated pressure, i.e., at pressure above 1 atmosphere.

Notwithstanding the claims, the invention is also referred to in the following clauses:
1. A reduced calorie beverage comprising:
   water;
   at least one non-nutritive sweetener having an off-note taste; and
   at least one tea extract in an unrecognizable amount,
   wherein the unrecognizable amount is sufficient to reduce the off-note taste of the non-nutritive sweetener.
2. The reduced calorie beverage of Clause 1 wherein the off-note taste is a metallic taste.
3. The reduced calorie beverage of Clause 1, wherein the at least one non-nutritive sweetener is selected from the group consisting of a steviol glycoside, Lo Han Guo and combinations thereof.
4. The reduced calorie beverage of Clause 1, wherein the at least one non-nutritive sweetener comprises rebaudioside A.
5. The reduced calorie beverage of Clause 1, wherein the at least one tea extract is an extract of black tea, oolong tea, green tea, white tea, herbal tea, citrus tea, infusions, or a combination of any of them.
6. The reduced calorie beverage of Clause 1, wherein the concentration of the tea extract in the beverage is between about 50 parts per trillion and about 500 parts per million.
7. The reduced calorie beverage Clause 1, further comprising erythritol and D-tagatose.
8. The reduced calorie beverage of Clause 1, further comprising a flavoring selected from the group consisting of cola flavor, tea flavor, juices, fruit flavors, botanical flavors, spices, and combinations thereof.
9. The reduced calorie beverage of Clause 1, wherein concentration of the tea extract in the beverage is between about 1 part per million and about 250 parts per million.
10. The reduced calorie beverage of Clause 1, wherein the off-note taste is a metallic off-note taste, and the tea extract is effective to eliminate the metallic off-note taste.
11. A concentrate for a reduced calorie beverage, comprising:
   at least one non-nutritive sweetener; and
   at least one tea extract present in the concentrate at a concentration which (i) results in an unrecognizable amount of the tea extract in the reduced calorie beverage, and (ii) is sufficient at least to reduce an off-note taste of the non-nutritive sweetener in the reduced calorie beverage.
12. The concentrate of Clause 11, wherein the concentrate is a syrup.
13. The concentrate of Clause 11, wherein the non-nutritive sweetener is selected from the group consisting of a steviol glycoside, Lo Han Guo and combinations thereof.
14. The concentrate of Clause 11, wherein the non-nutritive sweetener comprises rebaudioside A.
15. The concentrate of Clause 11, wherein the tea extract is an extract of black tea, oolong tea, green tea, white tea, herbal tea, citrus tea, infusions, or a combination thereof.
16. The concentrate of Clause 11, wherein the concentration of the tea extract is between about 50 parts per trillion and about 500 parts per million.
17. The concentrate of Clause 11, wherein the concentration of the at least one tea extract is between about 1 part per million and about 250 parts per million.
18. A sweetener product comprising:
   packaging, and
   a sweetener in the packaging, comprising a mixture of at least one non-nutritive sweetener and at least one tea extract, wherein the tea extract is present in the sweetener in a concentration suitable to reduce an off-note taste of the non-nutritive sweetener in food when the sweetener is used in an amount which yields an unrecognizable amount of the tea extract in the food.
19. The sweetener product of Clause 18 wherein the mixture is a substantially homogenous, dry mixture.
20. The sweetener product of Clause 18 wherein the mixture is a liquid.
21. The sweetener product of Clause 18 further comprising instructions for combining the mixture with food.
22. The sweetener product of Clause 18 comprising a plurality of packages of the sweetener, wherein each package has a predetermined amount of sweetener therein.
23. The sweetener product of Clause 18, further comprising at least one nutritive sweetener.
24. The reduced calorie beverage product of Clause 1, wherein the beverage product is clear.

Those of ordinary skill in the art will understand that, for convenience, some ingredients are described here in certain cases by reference to the original form of the ingredient in which it is used in formulating or producing the beverage product. Such original form of the ingredient may differ from the form in which the ingredient is found in the finished beverage product. Thus, for example, in certain exemplary embodiments of the beverage products according to this disclosure, sucrose and liquid sucrose would typically be substantially homogenously dissolved and dispersed in the beverage. Likewise, other ingredients identified as a solid, concentrate (e.g., juice concentrate), etc. would typically be homogenously dispersed throughout the beverage or throughout the beverage concentrate, rather than remaining in their original form. Thus, reference to the form of an ingredient of a beverage product formulation should not be taken as a limitation on the form of the ingredient in the beverage product, but rather as a convenient means of describing the ingredient as an isolated component of the product formulation.

Given the benefit of the above disclosure and description of exemplary embodiments, it will be apparent to those skilled in the art that numerous alternative and different embodiments are possible in keeping with the general principles of the invention disclosed here. Those skilled in this art will recognize that all such various modifications and alternative embodiments are within the true scope and spirit of the invention. The appended claims are intended to cover all such modifications and alternative embodiments. It should be understood that the use of a singular indefinite or definite article (e.g., "a," "an," "the," etc.) in this disclosure and in the following claims follows the traditional approach in patents of meaning "at least one" unless in a particular instance it is clear from context that the term is intended in that particular instance to mean specifically one and only one. Likewise, the term "comprising" is open ended, not excluding additional items, features, components, etc.

## Claims

1. A reduced calorie beverage comprising:
water;
a sweetener having an off-note taste comprising a bitter or metallic taste and comprising a sweetening amount of rebaudioside D; and
at least one tea extract in an unrecognizable amount, wherein the unrecognizable amount is sufficient to reduce the off-note taste of the sweetener.

2. The reduced calorie beverage of Claim 1 wherein the off-note taste is a metallic taste.

3. The reduced calorie beverage of Claim 1 or Claim 2, wherein the at least one tea extract is an extract of black tea, oolong tea, green tea, white tea, herbal tea, citrus tea, infusions, or a combination of any of them.

4. The reduced calorie beverage of any one of Claims 1-3, wherein the concentration of the tea extract in the beverage is between about 50 parts per trillion and about 500 parts per million.

5. The reduced calorie beverage of any one of Claims 1-4, wherein concentration of the tea extract in the beverage is between about 1 part per million and about 250 parts per million.

6. The reduced calorie beverage of one of Claims 1-5, further comprising a flavoring selected from the group consisting of cola flavor, tea flavor, juices, fruit flavors, botanical flavors, spices, and combinations thereof.

7. A concentrate for a reduced calorie beverage, comprising:
a sweetener comprising a sweetening amount of rebaudioside D; and
at least one tea extract present in the concentrate at a concentration which (i) results in an unrecognizable amount of the tea extract in the reduced calorie beverage, and (ii) is sufficient at least to reduce an off-note taste of the sweetener in the reduced calorie beverage
wherein the off-note taste is a bitter or metallic taste.

8. The concentrate of Claim 7, wherein the concentrate is a syrup.

9. The concentrate of Claim 7 or Claim 8, wherein the tea extract is an extract of black tea, oolong tea, green tea, white tea, herbal tea, citrus tea, infusions, or a combination thereof.

10. The concentrate of one of Claims 7-9, wherein the concentration of the tea extract is between about 50 parts per trillion and about 500 parts per million.

11. The concentrate of one of Claims 7-10, wherein the concentration of the at least one tea extract is between about 1 part per million and about 250 parts per million.
